# EUROPÄISCHE PATENTANMELDUNG

(11) **EP 0 530 484 A1**
(43) Veröffentlichungstag der Anmeldung: **10.03.1993**
(21) Anmeldenummer: 92112656.1
(22) Anmeldetag: 24.07.1992
(51) Int. Cl.: F16D 1/09

(54) **Konusspannanordnung**

(30) Priorität: 05.09.1991 DE 4129490
(71) Anmelder: Müllenberg, Ralph, D-41516 Grevenbroich (DE)
(72) Erfinder: Müllenberg, Ralph, D-41516 Grevenbroich (DE)
(74) Vertreter: Palgen, Peter, Dr. Dipl.-Phys.

(57) **Zusammenfassung**

Die Konusspannanordnung (100) ist in dem Zwischenraum (2) zwischen dem Außenumfang (4) einer Welle (1) und dem Innenumfang (5) der Bohrung eines äußeren Bauteils (3) angeordnet. Sie umfaßt ein Doppelkonusbauteil (A), einen auf der ersten Konusfläche (9) des Doppelkonusbauteils (A) angeordneten Konusring (B) und ein auf der zweiten Konusfläche (11) des Doppelkonusbauteils (A) angeordnetes Konusbauteil (C), welches einen axialen Ansatz (22) mit zylindrischer Innenumfangsfläche (23) aufweist, der die zylindrische Außenumfangsfläche (17) des Konusrings (B) übergreift und einen Übergriff (D) bildet. Bei der Verspannung tritt Reibung nur an drei Flächenpaaren auf. Beim Lösen stützt sich der Konusring (B) mit einem radialen Umfangsvorsprung (18) an der Flanke (13') einer Umfangsnut (13) des Doppelkonusbauteils (A) ab.

## Beschreibung

Die Erfindung bezieht sich auf eine Konusspannanordnung, bei welcher zwei in Achsrichtung hintereinander angeordnete Elemente mit einer konischen Innenumfangsfläche mittels axialer Spannschrauben auf eine Doppelkonusfläche heraufgezogen werden und auf diese Weise eine radiale Verspannung bewirkt wird.

Aus der DE-OS 21 59 813 ist eine als separater Spannsatz ausgebildete Spannanordnung zur Verspannung einer Nabe auf einer Welle bekannt, bei welcher in dem Zwischenraum zwischen Nabe und Welle auf der Welle ein dünnwandiger Doppelkonusring angeordnet ist, bei dem die größten Außendurchmesser der einzelnen Konusflächen einander in der Mitte benachbart sind und der in diesem mittleren Bereich eine Umfangsnut rechteckigen Querschnitts aufweist. Auf den beiden Konusflächen sind äußere Konusringe angeordnet, die mit ihren zylindrischen Außenumfangsflächen an der Innenumfangsfläche der Nabe anliegen. Die äußeren Konusringe weisen an den einander zugewandten Enden von ihrer Konusfläche radial nach innen vorspringende Bunde auf, die hakenartig in die Umfangsnut eingreifen. Die Spannschrauben erstrecken sich axial zwischen den äußeren Konusringen.

Beim Anziehen dieses Spannsatzes erfahren die äußeren Konusringe Reibung jeweils an ihren äußeren und inneren Umfangsflächen, d.h. es tritt insgesamt Reibung an vier Flächen auf. Hierdurch geht ein erheblicher Anteil der nutzbaren axialen Spannkraft der Spannschrauben für die Umsetzung in radiale Klemmkraft verloren.

Der Erfindung liegt die Aufgabe zugrunde, solche Verluste zu vermeiden.

Diese Aufgabe wird durch die in Anspruch 1 wiedergegebene Erfindung gelöst.

Es ist hierdurch erreicht, daß beim Anziehen einer solchen Konusspannanordnung Reibung nur an den beiden Konusflächenpaaren und an der zylindrischen Umfangsfläche des äußeren Konusrings auftritt, die an dem Übergriff des Konusbauteils anliegt. Im übrigen tritt keine axiale Verlagerung von Elementen beim Anziehen ein. Das wird allerdings damit erkauft, daß sich die Nabe beim Anziehen in Achsrichtung gegenüber der Welle verlagert. Diese Verlagerung kann jedoch in vielen Fällen hingenommen werden und tritt dann in ihrer Bedeutung gegenüber dem Gewinn an radialer Klemmkraft zurück. Die "Flanke" gestattet eine sichere Lösung der drei Elemente der Konusspannanordnung voneinander. Beim Betätigen der Andrückmittel kann das Konusbauteil mit dem "Übergriff" von der zylindrischen Umfangsfläche des Konusrings abgezogen werden, worauf alle Teile getrennt sind.

Das Übergreifen eines Konusrings durch ein axial benachbartes Konusbauteil, nämlich durch einen dünnwandigen axialen Ansatz eines axial benachbarten Konusrings, ist für sich genommen aus der DE-AS 26 52 157 bekannt. Hierbei handelt es sich aber nicht um einen Spannsatz oder eine Spannanordnung, bei der radiale Klemmkräfte durch den dünnwandigen Ansatz hindurch übertragen werden. Der dünnwandige Ansatz hat bei der bekannten Ausführungsform vielmehr nur eine Schutzfunktion, indem er das Eindringen von Verunreinigungen in den axialen Zwischenraum zwischen den beiden Konusringen verhindert.

Eine in der Praxis wichtige Ausgestaltung der Erfindung ist Gegenstand des Anspruchs 2.

Der Konusring besteht hierbei aus zwei Hälften, die bei der Montage ohne elastische radiale Verformung hinter die Flanke gebracht werden können. Bei der Ausführungsform nach der DE-OS 21 59 813 ist eine solche Verformung notwendig und dadurch die Eingriffstiefe der nach innen vorspringenden Bunde begrenzt. Dies bedeutet gleichzeitig eine Begrenzung der Abdrückkräfte, die bei festsitzenden Konusspannanordnungen unter Umständen zum Lösen nicht mehr ausreichen.

Im allgemeinen wird es ausreichen, wenn der Konusring an zwei um 180^{o} in Umfangsrichtung versetzten Stellen geteilt ist und somit aus zwei Hälften besteht.

Die Ausbildung der Konusspannanordnung nach Anspruch 3 ergibt einen Konusspannsatz mit zylindrischer Innen- und Außenumfangsfläche, der in den Zwischenraum zwischen einer Welle und einer Nabenbohrung einsetzbar ist. Der Vorteil liegt darin, daß die Außenumfangsfläche der Welle und die Innenumfangsfläche der Nabenbohrung keiner hochwertigen Bearbeitung und insbesondere nicht der Anbringung von Konusflächen bedürfen, was bei größeren Bauteilen einen erheblichen Aufwand erfordert, wenn die notwendige Präzision gewährleistet sein soll.

Der "Übergriff", d.h. die die zylindrische Umfangsfläche des Konusrings abdeckende Zylinderfläche des Konusbauteils kann bei einer als Spannsatz ausgebildeten Konusspannanordnung in der in Anspruch 4 wiedergegebenen Weise ausgebildet sein, die zwar für sich genommen, wie bereits erwähnt, aus der DE-AS 26 52 157 bekannt ist, jedoch hier eine neue Funktion erhält, indem die Verlagerung des Konusrings durch den Übergriff von dem benachbarten Bauteil ferngehalten wird.

Obwohl nicht zwingend, ist bei der bevorzugten Ausführungsform der Erfindung das Doppelkonusbauteil Innenbauteil und sitzen der Konusring und das Konusbauteil außen darauf.

Für die Ausbildung der Flanke und des entsprechenden Anlagebereichs kommen insbesondere die in den Ansprüchen 6 bzw. 7 wiedergegebenen alternativen Ausführungsformen in Betracht.

Als Abdrückmittel kommen gemäß Anspruch 8 funktionierende Abdrückschrauben in Betracht, die für sich genommen aus der DE-OS 21 59 813 bekannt sind.

Eine alternative Ausführungsform der Abdrückmittel ist in Anspruch 9 wiedergegeben. Hierbei wirken die Spannschrauben selbst als Abdrückmittel, indem sie mit der Außenseite ihres Kopfes gegen die eine Flanke der Ausnehmungen, in welchen der Kopf untergebracht ist, wirken (DE-PS 39 38 445).

Bei der erfindungsgemäßen Konusspannanordnung ist zwar das Lösen des Spannsatzes auf jeden Fall gewährleistet. Je nach der Konstellation im einzelnen kann es aber sein, daß sich der Konusring bei der Betätigung der Abdrückmittel nicht zuerst löst und daß es dementsprechend notwendig ist, den ganzen "Übergriff" des Konusbauteils von dem Konusring herunterzuziehen. Um die damit verbundenen großen Verschiebungswege zu vermeiden, kann sich die Maßnahme nach Anspruch 10 empfehlen, die sicherstellen soll, daß sich bei einer Betätigung der Abdrückmittel der Konusring stets zuerst löst.

In der Zeichnung sind Ausführungsbeispiele der Erfindung dargestellt.

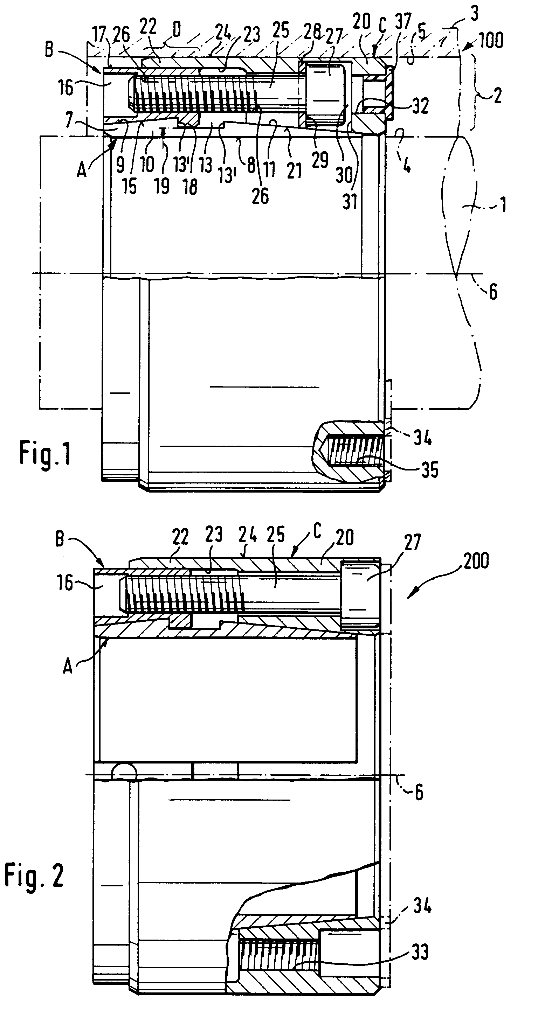

Fig. 1 bis 8 zeigen Seitenansichten verschiedener Ausführungsformen von Konusspannanordnungen, teilweise im Schnitt entlang durch die Achse gehender Ebenen.

Allen Ausführungsformen ist gemeinsam, daß sie ein Doppelkonusbauteil A, einen Konusring B und ein Konusbauteil C umfassen.

In dem Ausführungsbeispiel der Fig. 1 bildet die Konusspannanordnung 100 einen separaten Spannsatz, der eine von den zu verspannenden Bauteilen, nämlich der Welle und der Nabe 3, getrennte Baueinheit bildet und in einem radialen Zwischenraum 2 zwischen dem Außenumfang 4 der Welle 1 und dem Innenumfang 5 der Nabe 3 untergebracht ist.

Das Doppelkonusbauteil A ist in diesem Fall ein als Innenbauteil fungierender Doppelkonusring 10, der in einer durch die Achse 6 gehenden Ebene zur Vermeidung von Spannkraftverlusten längsgeschlitzt ist, was durch die fehlende Schraffur in der Trennfläche 7 angedeutet sein soll. Der Doppelkonusring 10 liegt mit seiner zylindrischen Innenumfangsfläche 8 auf der zylindrischen Außenumfangsfläche 4 der Welle 1 an. Er besitzt zwei axial benachbarte konische Außenumfangsflächen 9 und 11 mit im Selbsthemmungsbereich liegenden Konuswinkeln, wobei die größten Außendurchmesser der Konusflächen 9,11 einander etwa in der Mitte des Doppelkonusrings 10, axial gesehen, benachbart sind. In diesem Mittelbereich besitzt der Doppelkonusring 10 eine äussere Umfangsnut 13, deren Flanken 13' senkrecht zu der Achse 6 stehen.

Auf der Konusfläche 9 liegt mit einer konischen Innenumfangsfläche 15 ein den Konusring B bildender äußerer Konusring 16 an, der eine zylindrische Außenumfangsfläche 17 aufweist. An dem inneren, d.h. der Umfangsnut 13 zugewandten Ende der Konusfläche 15 springt ein radialer Umfangsvorsprung 18 nach innen vor, der sich hakenartig mit seiner Seitenfläche gegen die Flanke 13' der Nut 13 legt.

Der Konusring 16 ist an zwei um 180^{o} in Umfangsrichtung gegeneinander versetzten Stellen geteilt und besteht somit aus zwei Halbringen, die beim Zusammensetzen des Spannsatzes leicht von außen mit den radialen Umfangsvorsprüngen 18 in die Umfangsnut eingeführt werden können. Dadurch kann die Eingriffstiefe 19 des Umfangsvorsprungs 18 relativ groß sein, so daß er beim Lösen des Spannsatzes unter Anlage an der Flanke 13' entsprechend große axiale Kräfte übertragen kann.

Das Konusbauteil C ist bei dem Ausführungsbeispiel 100 durch einen äußeren Konusring 20 gebildet, der mit seiner konischen Innenumfangsfläche 21 auf der Konusfläche 11 des Doppelkonusrings 10 anliegt. Von dem dem äußeren Konusring 16 zugewandten Ende des Konusrings 20 lädt ein dünnwandiger Ansatz 22 aus, der mit seiner zylindrischen Innenumfangsfläche 23 die zylindrische Außenumfangsfläche 17 des äußeren Konusrings 16 übergreift und einen "Übergriff" D bildet, durch welchen die Außenumfangsfläche 17 des Konusrings 16 von dem Innenumfang 5 der Nabe 3 ferngehalten wird. Die zylindrische Außenumfangsfläche 24 des Ansatzes 22 geht in die zylindrische Außenumfangsfläche des Konusrings 20 über und liegt am Innenumfang 5 der Nabe 3 an.

Die Konusringe 16,20 werden durch axiale Spannschrauben 25 gegeneinandergezogen, die in Gewindebohrungen 26 des äußeren Konusrings 16 eingreifen. Die Spannschraube 25 durchgreift den Konusring 20 in einer Durchgangsbohrung 26 und liegt mit der Unterseite ihres Kopfes 27 an einem reibungsmindernden und/oder kraftverteilenden Ring 28 an, der sich gegen die in Fig. 1 linke Flanke 29 einer Ausnehmung 30 in dem Konusring 20 abstützt, die den Kopf 27 aufnimmt. Die Ausnehmung 30 ist auf der der Oberseite des Kopfes 27 zugewandten Seite durch eine ebenfalls zur Achse 6 senkrechte Flanke 31 begrenzt, die auf der Schraubenachse axiale Durchbrüche 32 aufweist, durch die ein Drehwerkzeug in der Mehrkantausnehmung des Schraubenkopfes 27 angreifen kann. Im Betrieb wird die Ausnehmung 32 durch einen Stopfen 37 oder einen sich über den ganzen Teilkreis erstreckenden Ring 34 verschlossen. Es können zwischen den Spannschrauben 25 an einer oder mehreren Stellen in der gemäß Fig. 1 rechten Stirnseite des Konusrings 20 kurze Gewindebohrungen 35 zum Einschrauben eines Halteelements vorgesehen sein, mittels dessen sich der Spannsatz in der Tiefe des Zwischenraums 2 handhaben läßt.

Beim Anziehen werden die Konusringe 16,20 gegeneinandergezogen und rutschen auf die Konusflächen 9,11 des Doppelkonusrings 10 hinauf, um die radiale Verspannung zu bewerkstelligen.

Zum Lösen werden die Schrauben 25 herausgedreht, bis sie nach Überwindung eins geringen Spiels mit der Außenseite ihres Kopfes 27 an der Flanke 31 der Ausnehmung 30 anliegen. Ein weiteres Herausdrehen fuhrt dazu, daß sich einer der Konusringe 16,20 von dem Doppelkonusring 10 löst. Die Fortsetzung des Herausdrehens läßt zu irgendeinem Zeitpunkt den Konusring 16 mit dem radialen Bund 18 an der Flanke 13' der Umfangsnut 13 zur Anlage kommen, worauf sich auch der andere Konusring 20 von dem Doppelkonusring 10 trennt. In der Praxis sind die Konuswinkel und die Umfangsflächen so bemessen, daß sich zuerst der Konusring 16 löst. Aber auch sonst ist ein vollständiges Lösen der Konusspannanordnung 100 immer möglich. Es muß lediglich die Spannschraube 25 weit genug herausgedreht werden, um den "Übergriff" D aufzuheben.

Die in Fig. 1 wiedergegebene Ausführungsform hat den Vorteil, daß der ganze Teilkreis gegebenenfalls bis auf eine oder zwei Gewindebohrungen 35 mit Spannschrauben 25 besetzt werden kann, die sich mit ihren Köpfen 27 in Umfangsrichtung fast berühren können. Es braucht kein Platz für separate Abdrückschrauben gelassen zu werden, wodurch sich die aufbringbare Spannkraft erhöht.

Die Spannanordnung 200 der Fig. 2 entspricht derjenigen der Fig. 1 mit der Ausnahme der Abdrückmittel. Soweit im übrigen hier wie auch bei den weiteren Beispielen einander entsprechende Teile vorhanden sind, sind die Bezugszahlen gleich. Die Schraubenköpfe 27 sind nicht in einer Ausnehmung entsprechend der Ausnehmung 30 in Fig. 1 untergebracht, sondern liegen frei. Es sind zwischen den Spannschrauben 25 über den Umfang verteilte nicht dargestellte Abdrückschrauben vorgesehen, die in Gewinde 33 des Konusrings 20 eingreifen und gegen gewindefreie Stellen des Konusrings 16 anliegen.

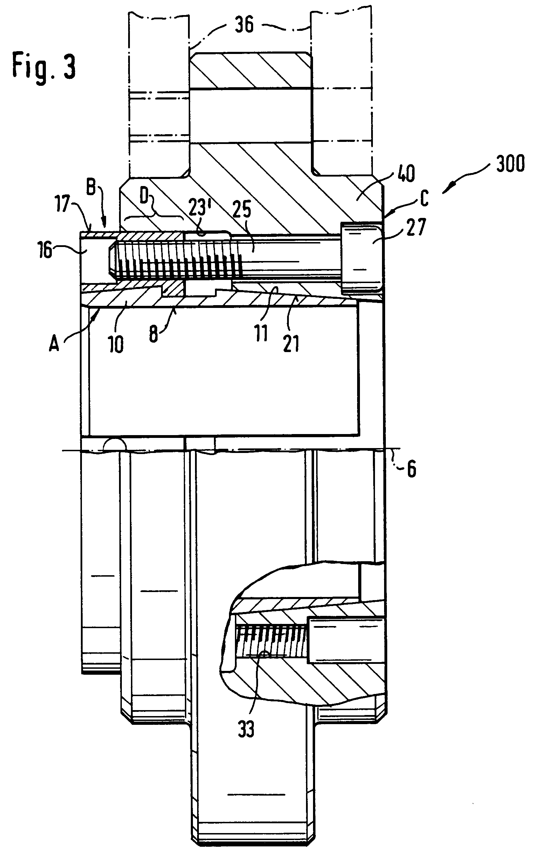

Bei der Konusspannanordnung 300 der Fig. 3 handelt es sich nicht um einen separaten Spannsatz mit zylindrischer Außen- und Innenumfangsfläche. Zwar ist das Doppelkonusbauteil A wie bei 100 und 200 als innerer Doppelkonusring 10 mit zylindrischer, auf einer Welle anliegender Innenumfangsfläche 8 ausgebildet, doch ist das Konusbauteil C kein Ring mit zylindrischer Außenumfangsfläche, sondern selbst das zu verspannende Bauteil in Gestalt eines Flanschrings 40, an welchem die Konusfläche 21 direkt angebracht ist und mit welchem Scheiben oder Böden 36 verbindbar sind. Die Konusfläche 21 wirkt mit der äußeren Konusfläche 11 des Doppelkonusrings 10 zusammen. Im Bereich der äußeren Konusfläche 9 bzw. des äußeren Konusrings 16 besitzt der Flanschring 40 eine zylindrische Innenumfangsfläche 23', die mit der Außenumfangsfläche 17 des Konusrings 16 zusammenwirkt und den Übergriff D bildet.

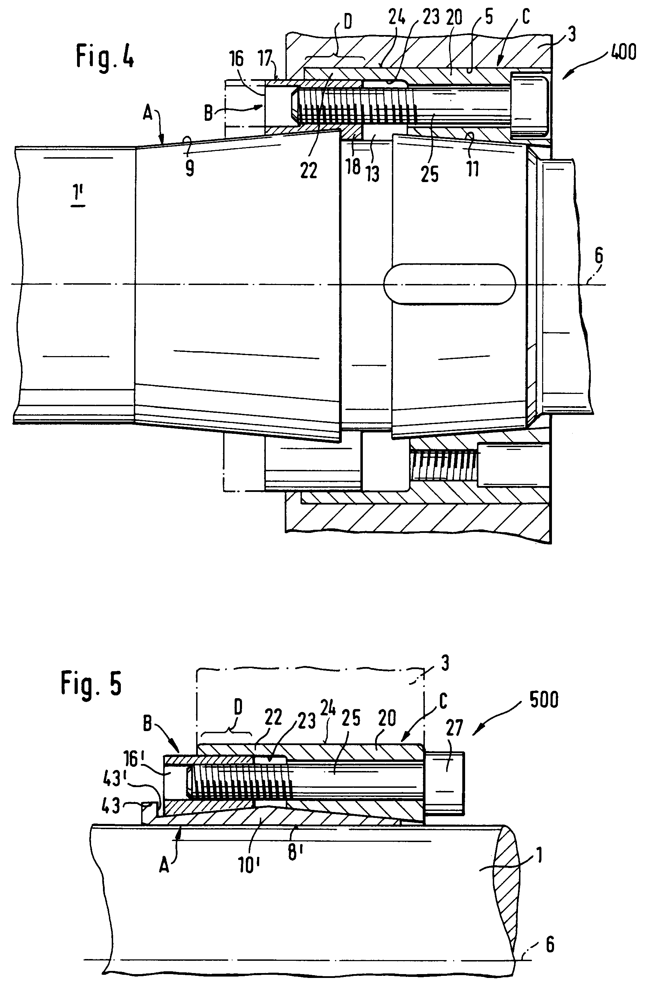

Bei der Ausführungsform 400 der Fig. 4 ist das Konusbauteil C wieder als separater Konusring 20 vorhanden, doch gibt es keinen Doppelkonusring entsprechend dem Doppelkonusring 10 der vorangehenden Figuren, sondern es ist die Welle 1' selbst das als Innenbauteil fungierende Doppelkonusbauteil A, insofern sie selbst die Konusflächen 9,11 und die dazwischenliegende Umfangsnut 13 aufweist. Der Konusring 20 liegt mit seiner konischen Innenumfangsfläche 21 auf der Konusfläche 11 der Welle 1' an und weist einen dünnwandigen axialen Ansatz 22 auf, der außen auf der zylindrischen Außenumfangsfläche 17 des Konusrings 16 sitzt und den Übergriff D bildet und mit seiner zylindrischen Außenumfangsfläche 24 an der Innenumfangsfläche 5 einer Nabe 3 anliegt.

Bei der Konusspannanordnung 500 der Fig. 5 ist wieder ein Spannsatz mit zylindrischer Außen- bzw. Innenumfangsfläche 24 bzw. 8' vorhanden, der im wesentlichen der Konusspannanordnung 200 entspricht. Ein Unterschied besteht jedoch in dem Widerlager beim Abdrücken, welches bei der Konusspannanordnung 500 nicht durch einen in eine Umfangsnut des Doppelkonusbauteils A eingreifenden Umfangsvorsprung des Konusrings 16' gebildet ist, sondern durch einen radial nach außen vorspringenden Umfangsvorsprung 43 des das Doppelkonusbauteil A bildenden Doppelkonusrings 10'. Der Umfangsvorsprung 43 liegt außen vor der dem Schraubenkopf 27 abgewandten Stirnseite des Konusrings 16' und bildet eine zur Achse 6 senkrechte Flanke 43', an welcher beim Lösen der Konusspannanordnung 500 die linke Stirnseite des Konusrings 16' zur Anlage kommt. Das Lösen kann mittels Abdrückschrauben geschehen, wie sie bei der Konusspannanordnung 200 vorhanden sind.

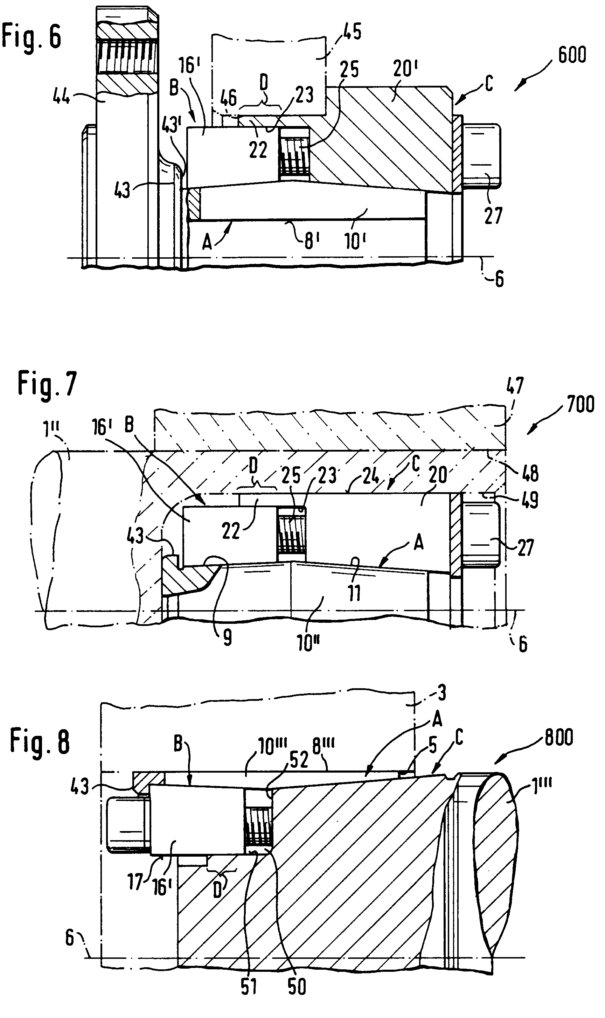

Bei der Konusspannanordnung 600 der Fig. 6 ist das Doppelkonusbauteil A wieder Innenbauteil und als Doppelkonusring 10' mit zylindrischer Innenumfangsfläche 8' zur Anlage auf einer nicht dargestellten Welle ausgebildet. Am gemäß Fig. 6 linken Ende des Doppelkonusrings 10' ist ein radial nach außen vorstehender Umfangsvorsprung 43 mit einer zur Achse 6 senkrechten Flanke 43' vorgesehen, die sich vor dem radial inneren Teil der gemäß Fig. 6 linken Flanke des Konusrings 16' erstreckt und an der diese Stirnseite beim Lösen der Konusspannanordnung 600 zur Anlage kommt. Der Umfangsvorsprung 43 ist Teil eines Flansches 44, an welchem Antriebs- oder Abtriebsmittel ankuppelbar sind.

Der außen auf dem Doppelkonusring 10' angeordnete, das Konusbauteil C bildende Konusring 20' ist nicht zur Einfügung in eine Nabenbohrung bestimmt, besitzt aber den dünnwandigen, den Übergriff D bildenden Ansatz 22, der in dem gezeigten Ausführungsbeispiel in der Bohrung 46 einer Scheibe oder eines Rades 45 anliegt. Die Scheibe oder das Rad 45 könnten auch mit dem Konusring 20' einstückig sein. Der Konusring 20' ist zur Aufnahme von Ringzugspannungen ungeschlitzt. Der Konusring 16' ist geteilt, der Doppelkonusring 10 geschlitzt, was durch die fehlende Schraffur angedeutet sein soll. Die Trennflächen liegen jedoch tatsächlich an in Umfangsrichtung versetzten Stellen.

Bei der Konusspannanordnung 700 der Fig. 7 ist auf dem Ende einer Welle 1'' ein äußeres Bauteil 47 mit einer passenden Bohrung 48 angeordnet. Im Bereich des äußeren Bauteils 47 ist in dem Wellenende eine zur Achse 6 der Welle 1'' koaxiale Bohrung 49 angebracht, in der ein Spannsatz angeordnet ist, der beim Anziehen das Wellenende radial aufweitet und auf diese Weise das äußere Bauteil 47 darauf festklemmt.

Das Doppelkonusbauteil A des in der Bohrung 49 angeordneten Spannsatzes besteht in diesem Fall aus einem massiven Doppelkonuszapfen 10'' mit äußeren Konusflächen 9 und 11, auf denen der Konusring B in Gestalt des äußeren Konusrings 16' und das Konusbauteil C in Gestalt des Konusrings 20 angeordnet sind. Der Konusring 20 besitzt wie bei den Konusspannanordnungen 100,200 und 500 einen axialen Ansatz 22, der den Übergriff D bildet und außen auf der zylindrischen Umfangsfläche 17 des Konusrings 16' anliegt. Zur Vermeidung von Spannkraftverlusten kann in diesem Fall auch der Konusring 20 an einer Stelle geschlitzt sein. Der radial nach außen vorstehende Umfangsvorsprung 43, der das Widerlager beim Lösen der Konusspannanordnung 700 bildet, ist in diesem Fall an dem gemäß Fig. 7 linken, d.h. den Schraubenköpfen 27 abgewandten Ende des Doppelkonuszapfens 10'' angebracht.

Bei der Konusspannanordnung 800 der Fig. 8 geht es um die Festlegung eines äußeren Bauteils 3 auf dem Ende einer Welle 1'''. Im Gegensatz zu den vorangehenden Ausführungsformen ist hier das Doppelkonusbauteil A Außenbauteil und ist durch einen Doppelkonusring 10''' gebildet, der mit seiner zylindrischen Außenumfangsfläche 8''' am Innenumfang 5 des äußeren Bauteils 3 anliegt. Vor der gemäß Fig. 8 linken Stirnfläche des nunmehr innenseitig des Doppelkonusrings 10''' angeordneten Konusrings 16' ist der radial nach innen vorstehende Umfangsvorsprung 43 vorgesehen. Seine zylindrische Umfangsfläche 17 liegt an der zylindrischen Außenumfangsfläche 51 eines an das Wellenende angedrehten Absatzes 50 an. Die Spannschrauben 25 sind in die zur Achse senkrechte Flanke 52 des Absatzes 50 eingedreht. Auch die nicht dargestellten Abdrückschrauben wirken gegen die Flanke 52. Von der Außenseite der Flanke 52 ist die Außenumfangsfläche 53 der Welle 1''' im Anlagebereich des Doppelkonusrings 10''' konisch ausgebildet. Die Welle 1''' ist also in diesem Fall das Konusbauteil C. Der Übergriff D ist im axial äußeren Bereich der Umfangsfläche 51 gebildet.

Gemeinsam ist allen Ausführungsformen, daß beim Anziehen der axialen Spannschrauben 25 eine unter Reibung vonstatten gehende Verlagerung nur an drei Flächen eintritt. Dabei verlagert sich allerdings die Nabe 3 gegenüber der Welle 1,1' bzw. 1''' etwas in Achsrichtung, was in vielen Fällen jedoch keine wesentliche Rolle spielt. In Fig. 7 tritt allerdings keine axiale Verlagerung des äußeren Bauteils 47 gegenüber der Welle 1'' ein, weil hier die Funktionsteile der Konusspannanordnung 700 in der Bohrung 49 sitzen und keinen Kontakt zu dem äußeren Bauteil 47 haben.

Der Ausdruck "dünnwandig" für den Doppelkonusring 10 und den axialen Ansatz 22 soll bedeuten, daß die Wandstärke dieser Teile in radialer Richtung nur einen Bruchteil des Durchmessers der axialen Spannschrauben 25 beträgt, in den Ausführungsbeispielen etwa ein Viertel bis die Hälfte. Die Konusringe 16 und 20 sind demgegenüber als "dickwandig" anzusprechen, weil sie die Spannschrauben 25 in Durchgangs- bzw. Gewindebohrungen aufnehmen können.

Die Wirkung des Übergriffs D besteht nicht nur darin, die Umfangsfläche 17 des Konusrings 16 bzw. 16' abzustützen, sondern auch darin, den Zusammenhalt der Teile zu gewährleisten. Der Konusring 16,16' soll ja in zwei Halbringe geteilt sein, um ihn mit einer ausreichenden Eingriffstiefe 19 (Fig. 1) ohne übermäßige mechanische Verformung montieren zu können. Die beiden Halbringe werden durch den Übergriff D radial festgehalten und auf die Konusfläche gedrückt, so daß sie sich nach der Herstellung des Übergriffs D nicht mehr von dem Doppelkonusring 10,10',10'',10''' entfernen könnnen.

## Patentansprüche

1. Konusspannanordnung
mit einem Doppelkonusbauteil (A) mit einer ersten und einer zweiten, axial benachbarten, als selbsthemmende Konusflächen ausgebildeten Umfangsfläche (9,11), die so angeordnet sind, daß die größte Wandstärke des Doppelkonusbauteils (A), axial gesehen, in dessen Mitte gelegen ist,
mit einem Konusring (B) mit einer zylindrischen Umfangsfläche (17) und einer dieser gegenüberliegenden konischen Umfangsfläche (15), die einen der ersten Konusfläche (9) des Doppelkonusbauteils (A) gleichen Konuswinkel aufweist und an dieser anliegt,
mit einem Konusbauteil (C) mit einer konischen Umfangsfläche (21), die einen der zweiten Konusfläche (11) des Doppelkonusbauteils (A) gleichen Konuswinkel aufweist und auf dieser anliegt,
mit einem an dem Konusbauteil (C) vorgesehenen Übergriff (D) mit einer zylindrischen Umfangsfläche (23), die der zylindrischen Umfangsfläche (17) des Konusrings (B) übergreift und an dieser anliegt,
mit über den Umfang verteilten axialen, als Kopfschrauben ausgebildeten Spannschrauben (25), die den Konusring (B) oder das Konusbauteil (C) durchgreifen und mit dem Kopf (27) daran liegen und mit dem Gewinde in das jeweils andere Element eingreifen,
mit Abdrückmitteln zum axialen Entfernen des Konusrings (B) und des Konusbauteils (C) voneinander
und mit einer dem Abschieben des Konusrings (B) von der ersten Konusfläche (9) des Doppelkonusbauteils (A) sich entgegenstellenden, im Bereich einer zur Achse senkrechten Ebene radial vorspringenden Flanke (13',43') an dem Doppelkonusbauteil (A).

2. Konusspannanordnung nach Anspruch 1, dadurch gekennzeichnet, daß die Flanke (13',43') an das Doppelkonusbauteil (A) einstückig angeformt und der Konusring (B) an mindestens zwei über den Umfang gleichmäßig verteilten Stellen in durch die Achse (6) gehenden Ebenen durchgehend geteilt ist.

3. Konusspannanordnung nach Anspruch 1 oder 2, dadurch gekennzeichnet, daß das Doppelkonusbauteil (A) und/ oder das Konusbauteil (C) als Doppelkonusring (10,10',10''') bzw. Konusring (20) mit den Konusflächen gegenüberliegenden zylindrischen Umfangsflächen (8,8';24) ausgebildet sind.

4. Konusspannanordnung nach Anspruch 3, dadurch gekennzeichnet, daß der Übergriff (D) an dem Konusbauteil (C) durch einen dünnwandigen axialen Ansatz (22) mit einer zu der zylindrischen Umfangsfläche (23) koaxialen zweiten zylindrischen Umfangsfläche gebildet ist, die in die zylindrische Umfangsfläche (24) des das Konusbauteil (C) bildenden Konusrings (20) übergeht.

5. Konusspannanordnung nach einem der Ansprüche 1 bis 4, dadurch gekennzeichnet, daß das Doppelkonusbauteil (A) Innenbauteil mit als Konusflächen (9,11) ausgebildeten Außenumfangsflächen ist und der Konusring (B) und das Konusbauteil (C) mit ihren als Konusflächen ausgebildeten Innenumfangsflächen (15,21) außen darauf angeordnet sind.

6. Konusspannanordnung nach einem der Ansprüche 1 bis 5, dadurch gekennzeichnet, daß die im Bereich einer zur Achse (6) senkrechten Ebene radial vorspringende Flanke (13') durch die Flanke einer axial zwischen den Konusflächen 9,11) des Doppelkonusbauteils (A) vorgesehenen Umfangsnut (13) gebildet ist und der Konusring (B) an seinem dünnwandigen Ende einen zur Achse (6) senkrecht vorstehenden, in die Umfangsnut (13) eingreifenden Umfangsvorsprung (18) aufweist.

7. Konusspannanordnung nach einem der Ansprüche 1 bis 5, dadurch gekennzeichnet, daß die im Bereich einer zur Achse (6) senkrechten Ebene radial vorspringende Flanke (43') durch einen am äußeren Ende der ersten Konusfläche (9) des Doppelkonusbauteils (A) vorgesehenen im Bereich einer zur Achse (6) senkrechten Ebene radial vor die axial äußere Stirnseite des Konusrings (B) vorspringenden Umfangsvorsprung (43) des Doppelkonusbauteils (A) gebildet ist.

8. Konusspannanordnung nach einem der Ansprüche 1 bis 7, dadurch gekennzeichnet, daß die Abdrückmittel durch in Umfangsrichtung zwischen den Spannschrauben (25) gleichmäßig verteilte axiale Abdrückschrauben gebildet sind, die in Gewindebohrungen (33) des Konusrings (B) oder des Konusbauteils (C) eingreifen und sich gegen bohrungsfreie Stellen an der axial inneren Stirnseite des jeweils anderen Elements abstützen.

9. Konusspannanordnung nach einem der Ansprüche 1 bis 7, dadurch gekennzeichnet, daß das Konusbauteil (C) Ausnehmungen (30) zur Aufnahme des Kopfes (27) der Spannschrauben (25) aufweist, die zur Achse senkrechte Flanken (29,31) als Anlageflächen für die Unter- bzw. Oberseite des Kopfes (27) in einem die Höhe des Kopfes (27) geringfügig überschreitenden Abstand aufweist und daß die Durchgangsbohrungen (26) des Konusbauteils (C) zum radialen Einführen der Spannschrauben (25) radial nach außen offen sind.

10. Konusspannanordnung nach einem der Ansprüche 1 bis 9, dadurch gekennzeichnet, daß die an einer Gegenfläche anliegenden Umfangsflächen nach Winkel und Ausdehnung so bemessen sind, daß sich bei Betätigung der Abdrückmittel der Konusring (B) zuerst löst und an der Flanke (13',43') des Doppelkonusbauteils (A) zur Anlage kommt.
